# EUROPÄISCHE PATENTSCHRIFT

(11) **EP 0 833 706 B1**
(45) Veröffentlichungstag und Bekanntmachung des Hinweises auf die Patenterteilung: **20.10.1999**
(21) Anmeldenummer: 95917894.8
(22) Anmeldetag: 09.05.1995
(51) Int. Cl.: B09B 3/00

(54) **VERFAHREN ZUM RECYCLEN VON KÜHLGERÄTEN**
REFRIGERATOR RECYCLING PROCESS
PROCEDE DE RECYCLAGE DE REFRIGERATEURS

(43) Veröffentlichungstag der Anmeldung: 08.04.1998
(73) Patentinhaber: BRESCH ENTSORGUNG GmbH, D-24539 Neumünster (DE)
(72) Erfinder: LANDAHL, Claus-Dieter, D-24626 Gross Kummerfeld (DE); HORST, Landahl, D-22339 Hamburg (DE)
(86) Internationale Anmeldenummer: DE9500621
(87) Internationale Veröffentlichungsnummer: WO9635524

(56) Entgegenhaltungen:
- EP-A- 0 397 971
- EP-A- 0 433 638
- EP-A- 0 538 677
- DE-A- 3 911 326
- DE-A- 4 027 056
- US-A- 2 059 486

## Beschreibung

Die vorliegende Erfindung betrifft das Recyceln von Kühlgeräten durch Entfernung leicht ausbaubarer Teile wie Motor, Kühlaggregat, Buntmetalle, Aluminium, Glasplatten, Schalter, Kabel, Beleuchtungskörper und dergleichen, Entnahme des Kühlmediums aus dem Kühlaggregat, Entnahme des Öls aus dem Motor und Entnahme des Kompressors bzw. der Kompressoren und Shredden des teildemontierten Kühlgerätes, wobei das aus dem Isoliermaterial freiwerdende Treibgas einem Aktivkohlefilter zugeführt wird. Nach dem Shredden wird das zerkleinerte Gut in eine Leichtfraktion und Schwerfraktion getrennt. Die weitere Zerkleinerung des Isolierschaumes aus der Leichtfraktion erfolgt in einem Kollergang. Das freiwerdende Treibgas wird durch Abkühlung verflüssigt.

Eine der wichtigen Entsorgungsaufgaben ist die Wiederaufarbeitung gebrauchter Kühlgeräte.

Die Wiederaufarbeitung ist nicht nur deshalb von Interesse, weil Eisenmetalle, Nichteisenmetalle, Kunststoffe und bestimmte leicht zu demontierende Teile wie Schalter, Beleuchtungskörper, Stecker und dergleichen rückgewinnbar sind, sondern von sehr großer Bedeutung ist, daß die Zerlegung der Kühlgeräte in der Weise erfolgt, daß das im Isoliermaterial des Kühlgerätes vorhandene Treibgas, bei diesem handelt es sich im wesentlichen um FCKWs, vollständig aufgefangen wird.

Verfahren zur Aufarbeitung von Kühlgeräten sind bereits bekannt. So wird in der DE 4027056 A1 ein Verfahren und eine Vorrichtung zur Entsorgung von Kühlgeräten insbesondere solchen mit PUR-Schaum-Isolierung beschrieben. Nach diesem Verfahren wird das von dem Kühlaggregat befreite Kühlgerät zunächst in einen Vorzerkleinerer geschleust.

Anschließend gelangt das vorzerkleinerte Gut in eine Hammermühle. Hinter der Hammermühle werden die schweren Stoffe wie Eisenblech, Kunststoff, Holz und Nichteisenmetalle von dem leichten PUR-Schaum abgetrennt. Der PUR-Schaum gelangt nun in eine Wirbelstrommühle. Anschließend wird der bereits weitgehend von Treibmitteln befreite PUR-Schaum einer Brikettierpresse zugeführt, wo letzte Anteile an Treibgas entfernt werden. Die Anlage befindet sich in einem geschlossenen Gehäuse, wobei das FCKW-Luft-Gemisch aus dem Gehäuse abgesaugt wird und Aktivkohle als Adsorptionsmittel zugeführt wird. Das auf der Aktivkohle adsorbierte FCKW wird anschließend mit Wasserdampf desorbiert.

Durch die vergleichsweise große Verdünnung des FCKW in Luft ist die Adsorptionsanlage entsprechend groß auszulegen und teuer. Ein weiterer Nachteil ist die aufwendige Zerkleinerung des Gerätes, bzw. des PUR-Schaums in einer Folge von Hammermühle. Nachzerkleinerung, Wirbelstrommühle und Brikettierpresse.

Die DE 3905610 C1 (EP-A-0397971) beschreibt ein Verfahren zum umweltfreundlichen Teilrecycling von Kühlgeräten, bei dem die leicht ausbaubaren Teile abgetrennt werden und das teildemontierte Kühlgerät in einem abgeschlossenen Raum zunächst grob in faustgroße Stücke zerkleinert und anschließend in eigroße Stücke feiner zerkleinert wird. Anschließend wird der PUR-Schaum von der Schwerfraktion getrennt. Der PUR-Schaum wird nun in einer Pressstation zusätzlich von Treibmittel (FCKW) befreit und gelangt schließlich in eine Kompaktierung. Bei dem Grobzerkleinerer handelt es sich um einen Shredder. Die Feinzerkleinerung ist nicht näher beschrieben.

Die Zerkleinerungsanlage wird kontinuierlich durch einen Ventilator abgesaugt, wobei wiederum ein vergleichsweise verdünntes FCKW-Luft-Gemisch über Aktivkohle als Adsorptionsmittel geleitet wird. Das Verfahren weist die gleichen Nachteile auf wie das oben bereits beschriebene.

In dem in der DE 3911326 A1 offenbarten Verfahren für die Aufbereitung von Kühlaggregaten wird ebenfalls aus den Zerkleinerungsgeräten freiwerdendes Treibmittel abgesaugt und gelangt hierdurch in großer Verdünnung in eine Adsorptionsanlage. Als Zerkleinerungsgeräte werden eine Schlägermühle, eine Schneidmühle oder eine Wirbelstrommühle eingesetzt.

In der EP 0433638 A2 werden ein Verfahren und eine Anlage zum Entsorgen von teilentsorgten Kühlgeräten offenbart. Die teilentsorgten Kühlgeräte werden in einer Zerkleinerungsanlage auf ca. 10 mm Korngröße zerkleinert. Der PUR-Schaum wird abgetrennt und in einer Gebläsemühle zu Pulver zermahlen. Insgesamt werden aus den Zerkleinerungsanlage ca. 90 Gewichts-% des im PUR-Schaums vorhandenen FCKW als Luft-Gemisch einer Kälteanlage zugeführt. Zusätzlich zu der zum Transport durch Absaugen erforderlichen Luft wird Luft zum Spülen des gepulverten PUR-Schaums hinter der Gebläsemühle benötigt. 9 % des FCKW/Luft-Gemisches werden an mehreren Stellen abgesaugt und über Aktivkohle geleitet. Die Tiefkühlung der großen Luftmenge im FCKW/Luft-Gemisch erfordert hohe Investitions- und Betriebskosten.

Es bestand daher die Aufgabenstellung angesichts des geschilderten Standes der Technik, Entsorgungsanlagen von Kühlgeräten weiter zu verbessern und insbesondere wirtschaftlicher zu gestalten. Dies ist der Anmelderin durch ein Verfahren zum Recyceln von Kühlgeräten gelungen, wobei aus diesen Motor Kühlaggregat, Buntmetalle, Aluminium, Glasplatten, Quecksilberschalter, Kabel, Beleuchtungskörper und dergleichen entfernt werden, das Kühlmedium aus Kühlaggregat und das Öl aus dem Motor entnommen werden, der (die) Kompressor (en) entnommen wird (werden), das teildemontierte Kühlgerät in einer Zerkleinerungsanlage zerkleinert wird, wobei das freiwerdende Treibgas abgeführt wird und der Zerkleinerungsanlage eine Trennanlage nachgeschaltet ist, in der eine Trennung in Leichtfraktion und Schwerfraktion erfolgt, dadurch gekennzeichnet, daß die Zerkleinerungsanlage mit einem Aktivkohlefilter verbunden ist, an welchem das Treibgas adsorbiert und von der Abluft getrennt wird, wobei in der Zerkleinerungsanlage freigesetztes Treibgas im Gemisch mit Luft über den Aktivkohlefilter geleitet wird, daß der Isolierschaum in der Leichtfraktion einem Kollergang zur weiteren Zerkleinerung zugeführt wird, daß in dieser das Treibgas vom Isoliermaterial getrennt wird und das Treibgas einer Kühlanlage zur Verflüssigung zugeführt wird und daß das auf der Aktivkohle adsorbierte Treibgas von der Aktivkohle desorbiert wird und ebenfalls einer Verflüssigungsanlage zugeführt wird.

Aus den angelieferten Kühlgeräten werden zunächst Schalter, insbesondere Quecksilber-Neigungsschalter, Beleuchtungskörper, Kabel und Stecker ausgebaut und sortenrein in Lagerbehältern abgelegt. Weiterhin werden die Glasplatten aus dem Kühlgerät entnommen.

Anschließend wird in einer Absaugstation der Kühlkreislauf angebohrt und das Kühlmittel (FCKW z.B. sogenanntes R12, Dichlordifluormethan)/Ölgemisch abgesaugt. Das Anbohren des Kühlkreislaufes erfolgt bevorzugt mittels eines Bohrkpopfes, der mit einer Zwei-Lippen-Dichtung ausgerüstet ist. Das FCKW/Ölgemisch wird in einen Behälter geleitet bzw. gesaugt, in dem das Kühlmittel abgetrennt wird. Nachdem das Kühlmittel einen Filter durchlaufen hat, wird es mittels eines Kompressors verdichtet und verflüssigt.

Das abgesaugte Öl wird in einer Ölentgasungsanlage vom FCKW bis auf üblichweise unter 0,2 Gewichts-% FCKW befreit. Der ausgeschiedene FCKW kann in der Trennanlage für das FCKW-Ölgemisch zurückgeführt werden und ebenfalls flüssig in Transportflaschen abgefüllt werden. Auch das abgeschiedene Öl wird in handelsüblichen Behältern gesammelt. Aus dem Motor wird das Öl entnommen.

Nunmehr wird der Kompressor, gegebenenfalls die Kompressoren aus dem Kühlgerät herausgeschnitten. Dies erfolgt beispielsweise mit einer Hydraulikschere.

Das auf diese Weise teildemontierte Kühlgerät gelangt nun zur Eingangsschleuse der Zerkleinerungsanlage. Der gesamte Zerkleinerungsanlagenbereich einschließlich Schleusen ist mit einem Umluft- und Abluftrohrsystem verbunden, um das in der Zerkleinerungsanlage freigesetzte Treibmittel (FCKW z.B. sogenanntes R11, Trichlorfluormethan) einem Aktivkohlefilter zuleiten zu können.

In der Zerkleinerungsanlage werden die Kühlgeräte bevorzugt zunächst in Streifen zerschnitten, beispielsweise in < 40 mm breite Streifen. Anschließend erfolgt ein Shredden der Streifen auf eine Korngröße von ca. 15 mm. Dies kann durch ein Shreddergerät oder auch mehrere, bevorzugt zwei Geräte erfolgen. In einer bevorzugten Fahrweise werden die teildemontierten Kühlgeräte mittels eines Schneidscheibenrotors in beispielsweise 40 mm breite Streifen geschnitten. Durch einen zweiten Schneidscheibenrotor erfolgt ein Zerschneiden in beispielsweise 15 mm breite Streifen. Durch einen 3. Schneidscheibenrotor, der quer zu den beiden genannten Geraten angeordnet ist, erfolgt ein Zerschneiden der Streifen in beispielsweise 15 mm breite Stücke. Das zerkleinerte Gut gelangt nunmehr über eine Austrittsschleuse in eine nachgeschaltete Trennanlage, bevorzugt eine Windsichtung.

Dort wird die Leichtfraktion, im wesentlichen bestehend aus dem Isolierschaum, von der Schwerkfraktion getrennt.

Die Schwergutfraktion gelangt zunächst in eine Reinigungstrommel. Im einfachsten Fall arbeitet die Trommel nach dem Prinzip einer Betonmischmaschine. Durch die Reibung der Materialien aneinander erfolgt eine Abtrennung von Restanhaftung von Isoliermaterial an Eisen- und Nichteisenmetallen.

Nunmehr wird aus der Schwerfraktion mittels eines Trommelmagneten Eisen abgeschieden und mittels eines Wirbelstrommagneten Nichteisenmetalle wie Kupfer und Aluminium. Die einzelnen Fraktionen werden in besondere Behälter abgefüllt.

Die Leichtfraktion bzw. der Isorlierschaum wird mittels eines Zyclons von der Umluft getrennt und gelangt über eine Schleuse in eine weitere Zerkleinerungsanlage. Diese ist erfindungsgemäß ein Kollergang. In diesem wird das Isoliermaterial mittels Rollen oder Walzen durch eine mit Öffnungen versehene Lochscheibe gepresst. Durch die mechanische Behandlung werden die Gasbläschen im Isolierschaum aufgerieben. Die dabei auftretende Temperatur begünstigt die Entgasung des Isolierschaumes zusätzlich. Durch das Pressen durch die Bohrungen der Lochscheibe wird das Material verdichtet. Das aus der Lochscheibe austretende entgaste und verdichtete Material kann hinter der Zerkleinerungsanlage abgesackt werden.

Die Zerkleinerungsanlage für die Leichtfraktion ist über ein Rohrsystem mit einer Aufbereitungsanlage verbunden und wird permanent abgesaugt. Der Gasstrom, der das Treibgas in relativ hoher Konzentration enthält, wird über wenigstens einen Kühler, bevorzugt einen Wasserkühler und eine Trocknungsanlage einer Verflüssigungsanlage zugeführt. Von dort kann das verflüssigte FCKW in Transportflaschen abgefüllt werden.

Das im Wasserkühler anfallende Wasserkondensat kann wie im Zusammenhang mit dem Treibgas/Luftstrom aus der Shredderanlage weiter unten erläutert, verwendet werden.

Die Abluft aus der ersten Zerkleinerungsanlage (Shredderanlage), die das Treibgas (FCKW) in etwa zehnfacher Verdünnung verglichen mit dem Treibgas/Luftgemisch aus der zweiten Zerkleinerungsanlage enthalten kann, wird über Aktivkohlefilter geleitet.

Vor Eintritt in den Aktivkohlefilter wird der Treibgas/Luftstrom ebenfalls bevorzugt gekühlt und getrocknet. Hierbei anfallendes Wasser kann dem treibmittelfreien Schaumgut wieder zugesetzt werden, es kann auch zu erhöhter Dampfbildung und damit verbesserter Austreibung von Treibgas dem zu entgasenden Gut vor Eintritt in den Kollergang zugesetzt werden. Nach Durchfliessen eines Staubfilters gelangt das Gasgemisch auf den Aktivkohlefilter. Bevorzugt besteht dieser aus zwei Aktivkohlebetten, von denen beispielhaft jedes Bett ca. 250 kg Aktivkohle enthält. Mit diesen Bettfüllungen lassen sich wenigstens 40 Kühlgeräte pro Stunde verarbeiten, wobei ein Durchschlag von FCKW durch den Filter ausgeschlossen ist. Die Zahl der Geräte ist abhängig von der Größe der verarbeitenden Kühlgeräte.

In Abhängigkeit von dem Zerkleinerungsgrad in der ersten und zweiten Zerkleinerungsstufe werden in der ersten Stufe beispielhaft 40 % bis 45 % des gesamten im Isoliermaterial vorhandenen Treibgases freigesetzt und auf die Aktivkohlefilter geleitet.

Nach Beladung eines Aktivkohlefilterbettes erfolgt die Desorption der Aktivkohle, während das zweite Bett in Betrieb genommen wird. Beispielsweise durch eine interne Beheizung läßt sich das auf der Aktivkohle adsorbierte Treibgas bis zu wenigstens 90 % desorbieren. Das freigesetzte Treibgas gelangt nun in eine Verflüssigungsanlage, wird dort verflüssigt und in Transportflaschen abgefüllt.

Das erfindungsgemäße Verfahren wird bevorzugt kontinuierlich betrieben. Eine diskontinuierliche Fahrweise, wie sie gemäß Stand der Technik erfolgt, ist ebenfalls möglich. Die erfindungsgemäße Aufteilung der Freisetzung des Treibgases in der ersten und zweiten Zerkleinerungsstufe, wobei ein Teil des Treibgases in relativ hoher Verdünnung mit Luft auf Aktivkohle adsorbiert wird und ein weiterer Anteil in relativ hoher Konzentration direkt nach Kühlen und Trocknen verflüssigt wird, erlaubt es, die erfindungsgemäße Kühlgeräteentsorgungsanlage besonders wirtschaftlich zu betreiben. Zudem erlaubt die erfindungsgemäß bevorzugte Auswahl der Zerkleinerungsgeräte eine praktisch vollständige Rückgewinnung des im Kühlgerät vorhandenen Treibgases. Durch die Trocknung der Treibgas enthaltenen Gasgemische kann eine Vereisung der Verflüssungsanlagen wirkungsvoll unterbunden werden.

Darüber hinaus können mit dem erfindungsgemäßen Verfahren auch sonstige Schäume wie beispielsweise Schall- und Wärmeisoliermaterialien, Produktionsabfälle sowie Kraftfahrzeugteile, die Treibschäume enthalten oder sonstige Hartschaumstoffteile aufgearbeitet werden unter praktisch vollständiger Rückgewinnung des Treibmittels.

Das Verfahren erlaubt darüber hinaus auch die Rückgewinnung von Treibmitteln, die nicht zur Gruppe der FCKWs gehören, wie z.B. Kohlenwasserstoff-Treibmittel oder andere Treibgase, wobei gegegenenfalls zusätzliche Sicherheitsvorkehrungen wahrzunehmen sind.

Auch Geräte, die als Kühlmittel anstelle von FCKW wie z.B. R₁₂ Nicht-FCKW-Kühlmittel wie z.B. Ammoniak enthalten, können nach Absaugen des Ammoniaks erfindungsgemäß entsorgt werden.

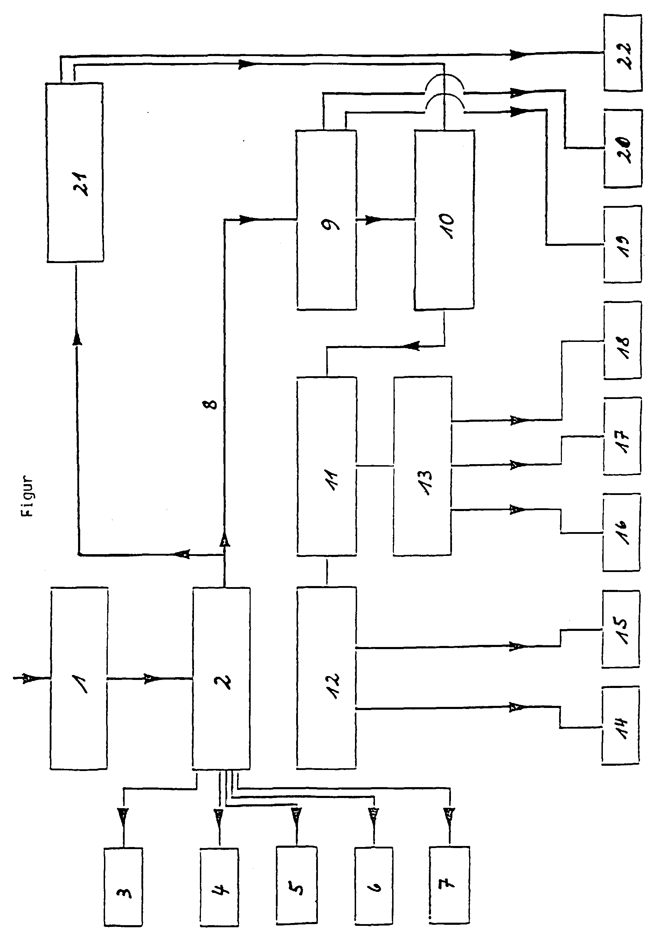

Mit Hilfe der Figur soll das erfindungsgemäße Verfahren beispielhaft näher erläutert werden.

Über Lager 1 werden Altkühlgeräte angeliefert. Sie gelangen zunächst zur Vorsortierung 2. Dort werden gegebenenfalls Schadstoffe in Behälter 3 entfernt. Kabel gelangen nach Behälter 4, Hausmüll in Behälter 5 und Glas in Behälter 6. Lose Kunststoffteile werden in Behälter 7 gesammelt. Über 8 werden die teildemontierten Kühlgeräte zur Kühlmittel- und Öl-Absaugung nach 9 befördert. In 10 wird die Kältemaschine entfernt. 11 Stellt die Shredder aufweisende Zerkleinerungsanlage dar und 12 den Kollergang zur Zerkleinerung der Leichtfraktion. Aus 12 wird das Treibmittel in 14 abgefüllt und der zerkleinerte Isolierschaum in 15. Hinter der Zerkleinerungsanlage 11 erfolgt die Sortierung in 13 in Nichteisenmetalle 16, Kunststoffe 17 und Eisenmetalle 18. Kühlmittel und Öl aus 9 gelangen in Abfüllbehälter 19 und 20. Enthält das Gerät Ammoniak als Kühlmittel, so gelangt es über die Ammoniakabsaugung 21 ebenfalls zur Demontage 10, während das Amoniak in 22 gesammelt wird.

## Patentansprüche

1. Verfahren zum Recyceln von Kühlgeräten, wobei aus diesen Motor, Kühlaggregat, Buntmetalle, Aluminium, Glasplatten, Quecksilberschalter, Kabel, Beleuchtungskörper und dergleichen entfernt werden, das Kühlmedium aus dem Kühlaggregat und das Öl aus dem Motor entnommen werden, der (die) Kompressor (en) entnommen wird (werden), das teildemontierte Kühlgerät in einer Zerkleinerungsanlage zerkleinert wird, wobei das freiwerdende Treibgas abgeführt wird und der Zerkleinerungsanlage eine Trennanlage nachgeschaltet ist, in der eine Trennung in Leichtfraktion und Schwerfraktion erfolgt, dadurch gekennzeichnet, daß die Zerkleinerungsanlage mit einem Aktivkohlefilter verbunden ist, an welchem das Treibgas adsorbiert und von der Abluft getrennt wird, wobei in der Zerkleinerungsanlage freigesetztes Treibgas im Gemisch mit Luft über den Aktivkohlefilter geleitet wird, daß der Isolierschaum in der Leichtfraktion einem Kollergang zur weiteren Zerkleinerung zugeführt wird, daß in dieser das Treibgas vom Isoliermaterial getrennt wird und das Treibgas einer Kühlanlage zur Verflüssigung zugeführt wird und daß das auf der Aktivkohle adsorbierte Treibgas von der Aktivkohle desorbiert wird und ebenfalls einer Verflüssigungsanlage zugeführt wird.

2. Verfahren nach Anspruch 1, dadurch gekennzeichnet, daß FCKW als Kühlmittel abgetrennt wird.

3. Verfahren nach wenigstens einem der Ansprüche 1 und 2, dadurch gekennzeichnet, daß FCKW als Treibgas in den Zerkleinerungsanlagen freigesetzt wird.

4. Verfahren nach wenigstens einem der Ansprüche 1 bis 3, dadurch gekennzeichnet, daß in der ersten Zerkleinerungsanlage das Kühlgerät mittels wenigstens einer Shredderstufe zerkleinert wird.

5. Verfahren nach wenigstens einem der Ansprüche 1 bis 4, dadurch gekennzeichnet, daß in der ersten Zerkleinerungsanlage eine Zerkleinerung auf eine Korngröße < 25 mm erfolgt.

6. Verfahren nach wenigstens einem der Ansprüche 1 bis 5, dadurch gekennzeichnet, daß das Shredden in zwei Stufen erfolgt.

7. Verfahren nach wenigstens einem der Ansprüche 1 bis 6, dadurch gekennzeichnet, daß die in der ersten Zerkleinerungsanlage erzeugte Schwerfraktion in eine Kunststoff-, Eisen- und Nichteisenfraktion getrennt wird.

8. Verfahren nach wenigstens einem der Ansprüche 1 bis 7, dadurch gekennzeichnet, daß als Isoliermaterial PUR-Schaum zerkleinert wird.

9. Verfahren nach wenigstens einem der Ansprüche 1 bis 8, dadurch gekennzeichnet, daß vor dem Shredden eine Zerkleinerung durch Zerschneiden, vorzugsweise in Materialstreifen, erfolgt.

10. Verfahren nach wenigstens einem der Ansprüche 1 bis 9, dadurch gekennzeichnet, daß die Trennung des geshreddeten Materials in Leichtfraktion und Schwerfraktion durch Windsichten erfolgt.

11. Verfahren nach wenigstens einem der Ansprüche 1 bis 10, dadurch gekennzeichnet, daß die Zerkleinerung im Kollergang bei erhöhter Temperatur erfolgt.

12. Verfahren nach wenigstens einem der Ansprüche 1 bis 11, dadurch gekennzeichnet, daß das Aktivkohlefilter aus zwei Aktivkohle-Betten besteht.

13. Verfahren nach wenigstens einem der Ansprüche 1 bis 12, dadurch gekennzeichnet, daß die Fahrweise kontinuierlich erfolgt.

## Claims

1. Process for recycling refrigerating devices, whereby motor, refrigerating unit, colored metals, aluminum, glass plates, mercury switches, cables, illuminating bodies and such-like are separated, the refrigerating agent is separated from the refrigerating unit and the oil is separated from the motor, the compressor(s) is (are) withdrawn, the partially dismantled refrigerating unit is crushed in a crushing unit, whereby the liberated propellant is led away and the crushing unit is followed by a separating unit, within which separation of a tight fraction and a heavy fraction takes place, characterized in that the crushing unit is connected to a charcoal filter, which adsorbes the propellant and thus separates the propellant from the spent air, whereby propellant, liberated within the crushing unit, is led, mixed with air, through the charcoal filter, in that the insulating foam within the light fraction is led to a crushing roller unit for further crushing, in that within the crushing roller unit the propellant is separated from the insulating material and in that the propellant is led to a cooling unit for liquifaction and in that the propellant adsorbed a the charcoal is desorbed from the charcoal and is also led to a liquifaction unit.

2. Process according to claim 1, characterized in that fluorochlorohydrocarbon as a refrigerating agent ist separated.

3. Process according to claims 1 and 2, characterized in that fluorochlorohydrocarbon as propellant is liberated with in the crushing unit.

4. Process according to at least one of claims 1 to 3, characterized in that within the first crushing unit the refrigerating device is crushed with the aid of at least one shredder stage.

5. Process according to at least one of claims 1 to 4, characterized in that within the first crushing unit crushing to a granulating size of < 25 mm takes place.

6. Process according to at least one of claims 1 to 5, characterized in that shredding takes place in two stages.

7. Process according to at least one of claims 1 to 6, characterized in that the heavy fraction, produced within the first crushing unit, is separated into a plastic-, iron-and non-iron fraction.

8. Process according to at least one of claims 1 to 7, characterized in that polyurethane foam as insulating material is crushed.

9. Process according to at least one of claims 1 to 8, characterized in that before shredding, disintegrating by cutting in pieces, preferably in material stripes takes place.

10. Process according to at least one of claims 1 to 9, characterized in that the separation of the shredded material into a light and heavy fraction takes place by wind blasting.

11. Process according to at least one of claims 1 to 10, characterized in that crushing within the crushing roller unit takes place at elevated temperature.

12. Process according to at least one of claims 1 to 11, characterized in that the charcoal filter consists of two charcoal beds.

13. Process according to at least one of claims 1 to 12, characterized in that processing is continuous.

## Revendications

1. , Procédé pour le recyclage des appareils frigorifiques à l'occasion de quoi le moteur, les agrégats frigorifiques, les métaux lourds sans du fer, du aluminium, les plaques de verre, les interrupteurs basculamts à mercure, les câbles, les appareils d'éclairage et pareil sont écartés des appareils frigorifiques, à l'occasion de quoi l'agent réfrigérant est écarté du l'agrégat frigorifique et l'huile du moteur est écarté du moteur, le (les) compesseur(s) est (sont) écarté(s), l'appareil frigorifique, démonté en partie, est concassé dans une machine de concassage, à l'occasion de quoi le gaz propulseur liberé est emmené et une installation séparatrice est intercalée en arrière la machine de concassage, dans laquelle une séparation a lieu dans une fraction légère et une fraction lourde, caractérisé en ce que la machine de concassage est connectée avec un filtre du charbon actif, dans lequel le gaz propulseur est adsorbé et séparé de l'air sortant, à l'occasion de quoi du gaz propulseur, liberé dans la machine de concassage est guidé sur le filtre du charbon actif en mélange avec de l'air, en ce que la mousse isolante dans la fraction légère est amené à un meuleton pour concassage supplémentaire, en ce que dans la fraction légère le gaz propulseur est separé de la matière isolante et en ce que le gaz propulseur est amené à une machine frigorifique pour liquéfaction et en ce que le gaz propulseur, adsorbé sur le charbon actif est désorbé du charbon actif et aussi amené à une machine frigorifique.

2. Procédé selon la revendication 1, caractérisé en ce que fluorochlorohydrocarbure comme agent réfrigérant est séparé.

3. Procédé selon au moins l'une des revendications 1 et 2, caractérisé en ce que fluorochlorohydrocarbure comme du gaz propulseur est liberé dans les machines de concassage.

4. Procédé selon au moins l'une des revendications 1 à 3, caractérisé en ce que dans la première machine de concassage l'apareil frigorifique est concassé en moyen d'au moins une passe de découper.

5. Procédé selon au moins l'une des revendications 1 à 4, caractérisé en ce que dans la première machine de concassage, le concassage a lieu à une groisseur de grain de < 25 mm.

6. Procédé selon au moins l'une des revendications 1 à 5, caractérisé en ce que découper a lieu à deux passes.

7. Procédé selon au moins l'une des revendications 1 à 6, caractérisé en ce que la fraction lourde produite dans la première machine de concassage est separée dans une fraction de matière plastique, une fraction de fer et une fraction sans fer.

8. Procédé selon au moins l'une des revendications 1 à 7, caractérisé en ce que comme de la matière isolante, de la mousse de polyuréthane est concassée.

9. Procédé selon au moins l'une des revendications 1 à 8, caractérisé en ce qu'une concassage a lieu par trancher à des bandes de matière avant le découper.

10. Procédé selon au moins l'une des revendications 1 à 9, caractérisé en ce que la séparation de la matière découpée dans une fraction légère et une fraction lourde a lieu par aéro-séparation.

11. Procédé selon au moins l'une des revendications 1 à 10, caractérisé en ce que le concassage dans le meuleton a lieu à une température élevée.

12. Procédé selon au moins l'une des revendications 1 à 11, caractérisé en ce que le filtre de charbon actif consist de deux lits de charbon actif.

13. Procédé selon au moins l'une des revendications 1 à 12, caractérisé en ce que l'operation est continue.
